# EUROPEAN PATENT APPLICATION

(11) **EP 1 526 463 A1**
(43) Date of publication of application: **27.04.2005**
(21) Application number: 04023420.5
(22) Date of filing: 01.10.2004
(51) Int. Cl.: G06F 17/24

(54) **Electronic sticky notes**

(30) Priority: 24.10.2003 US 692017
(71) Applicant: MICROSOFT CORPORATION, Redmond, WA 98052 (US)
(72) Inventor: Schobbe, Gerhard A. Microsoft Corporation, Redmond,WA 98052 (US); Khoury, Issa Y. Microsoft Corporation, Redmond,WA 98052 (US); Kim, Joon Young Microsoft Corporation, Redmond, WA 98052 (US); Lerner, Matthew R. Microsoft Corporation, Redmond, WA 98052 (US); Williams, Michael G. Microsoft Corporation, Redmond, WA 98052 (US); Van Dongen, Niels Microsoft Corporation, Redmond, WA 98052 (US); Swaney, Richard J. Microsoft Corporation, Redmond, WA 98052 (US); Cukierman, Ryan E. Microsoft Corporation, Redmond, WA 98052 (US); Madan, Vikram Microsoft Corporation, Redmond, WA 98052 (US); Finlay, Wayne Microsoft Corporation, Redmond, WA 98052 (US); Zeng, Wei Microsoft Corporation, Redmond, WA 98052 (US)
(74) Representative: Grünecker, Kinkeldey, Stockmair & Schwanhäusser Anwaltssozietät

(57) **Abstract**

An electronic version of physical paper sticky notes is defined. The electronic sticky notes may be attached to or embedded in items such as files and folders. The icons representing the items may include indications as to whether an electronic sticky note is attached thereto. The electronic sticky notes may be seamlessly moved between various attachment states and between various locations on a computer screen.

## Description

### FIELD OF THE INVENTION

Aspects of the present invention are directed generally to an electronic version of the paper sticky note for use on a computer.

### BACKGROUND

The ubiquitous paper sticky note has been in popular use for years. For example, 3M POST-IT brand paper sticky notes allow people to quickly take notes and stick the notes to various things, such as physical desks, physical folders, equipment, and the like. Various software applications exist that attempt to emulate some sticky note functionality in the computer environment. However, improvements to such digital forms of sticky notes are greatly needed if digital sticky notes are to be truly useful to the computer user.

For example, some applications do not emulate the "stickiness" of paper sticky notes. In other words, a user cannot necessarily stick the digital forms of sticky notes to other objects in the computer environment. Instead, such digital forms of sticky notes are created by a separate application, where the digital sticky notes may only be used within that application. In some implementations, digital forms of sticky notes cannot easily or seamlessly be moved around from context to context or between applications. For example, known digital forms of sticky notes cannot be moved from a computer desktop to an item such as a folder or file, or to an icon or other representation of an item, or embedded into a document. Another disadvantage of known digital forms of sticky notes is that they are not easily searchable independently of the location or context of the sticky notes.

### SUMMARY OF THE INVENTION

Aspects of the present invention are directed to the creation and manipulation of electronic versions of paper sticky notes. These electronic sticky notes may have various attachment states. For example, an electronic sticky note may be attached to the outside of an item, embedded inside an item, or a standalone note (i.e., neither attached to nor embedded in any item). Examples of such items include, but are not limited to, a file, a folder, a document, an application, an icon, a contact, a hypertext link, a photo file, a conceptual item such as a date on a calendar, an item such as a printer or a network machine, or a virtual item such as a database query or result.

Further aspects of the present invention are directed to displaying an item icon with an indication as to whether an electronic sticky note is attached to the item. For example, the indication may be a graphical representation of a paper sticky note overlaid on the item icon, or the indication may be otherwise associated with or part of the item icon. This may allow the user to quickly ascertain which items have attached electronic sticky notes. The user may be able to preview, view, detach, or delete the attached electronic sticky note without having to open the item.

Further aspects of the present invention are directed to seamlessly moving electronic sticky notes between various attachment states and between various locations on a computer screen. For example, a user may easily create an electronic sticky note and then attach it to an item or embed it inside an item such as on a particular page of a document. The electronic sticky note may be as ubiquitous as the physical paper sticky note in that it may be attached and detached to/from nearly anything that the user can view and/or interact with in the computing environment. Notably, the electronic sticky note is not limited to a particular single application.

Still further aspects of the present invention are directed to providing an application programming interface that allows developers to customize and use the functionality and appearance of electronic sticky notes. The electronic sticky notes may interface with both the operating system and with developer applications.

Still further aspects of the present invention are directed to providing a user-friendly interface that allows users to quickly understand how to attach and detach electronic sticky notes to and from items. For example, a "dog-ear" graphical representation may be selectable such that, when selected, the electronic sticky note automatically attaches or detaches to or from an underlying item.

Yet further aspects of the present invention are directed to allowing the insertion of various content into an electronic sticky note. Content may be created in the electronic sticky note or may be copied into the electronic sticky note from another source. Content copied onto the electronic sticky note may be further edited and/or annotated.

These and other aspects of the invention will become apparent to one of ordinary skill in the art upon a reading of the following description, drawings, and the claims.

### BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention.

Figures 1 and 2 are illustrative functional block diagrams of computing environments.

Figure 3 is an illustrative representation of an electronic sticky note as it may be viewed by a user, in accordance with at least one aspect of the present invention.

Figure 4 is an illustrative representation of an electronic sticky note including textual content as it may be viewed by a user, in accordance with at least one aspect of the present invention.

Figure 5 is an illustrative representation of an electronic sticky note including both ink and textual content as it may be viewed by a user, in accordance with at least one aspect of the present invention.

Figure 6 includes various illustrative representations of an item icon with and without an electronic sticky note indication, in accordance with at least one aspect of the present invention.

Figure 7 is an illustrative screen shot of an application window including an open document with an electronic sticky note embedded in the document, in accordance with at least one aspect of the present invention.

Figure 8 is an illustrative screen shot of an Internet web browser screen showing an Internet web page including an embedded electronic sticky note, in accordance with at least one aspect of the present invention.

Figure 9 is an illustrative representation of a plurality of item icons, wherein an electronic sticky note icon has been dragged over one of the underlying item icons, as may be viewed by a user and in accordance with at least one aspect of the present invention.

Figure 10 is an illustrative representation of a plurality of item icons, one of which includes an indication that an electronic sticky note is attached, including a preview of the electronic sticky note, as may be viewed by a user and in accordance with at least one aspect of the present invention.

Figures 11 and 12 are illustrative representations of an item icon with an electronic sticky note indicator.

Figures 13 and 14 are illustrative representations of an electronic sticky note as it may be viewed by a user, including drop-down menus, in accordance with at least one aspect of the present invention.

Figure 15 is an illustrative functional block diagram showing interaction between a Sticky Note Coordinator, a Sticky Note Manager, and electronic sticky note instances, in accordance with at least one aspect of the present invention.

Figure 16 is an illustrative functional block diagram showing interactions between various aspects of the present invention and a shell.

Figure 17 is a flow chart showing illustrative steps that may be taken to change the attachment state of an electronic sticky note, in accordance with at least one aspect of the present invention.

### DETAILED DESCRIPTION OF ILLUSTRATIVE EMBODIMENTS

### General Computing Environment

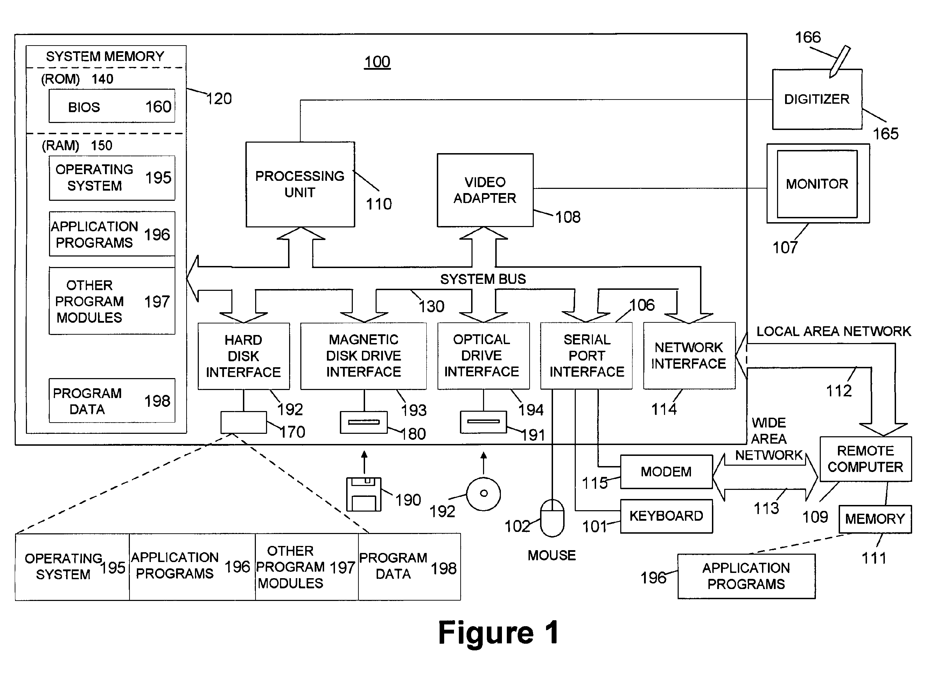

Figure 1 is a functional block diagram of an example of a conventional general-purpose digital computing environment that can be used to implement various aspects of the present invention. In Figure 1, a computer 100 includes a processing unit 110, a system memory 120, and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes read only memory (ROM) 140 and random access memory (RAM) 150.

A basic input/output system 160 (BIOS), containing the basic routines that help to transfer information between elements within the computer 100, such as during start-up, is stored in the ROM 140. The computer 100 also includes a hard disk drive 170 for reading from and writing to a hard disk (not shown), a magnetic disk drive 180 for reading from or writing to a removable magnetic disk 190, and an optical disk drive 191 for reading from or writing to a removable optical disk 192 such as a CD ROM or other optical media. The hard disk drive 170, magnetic disk drive 180, and optical disk drive 191 are connected to the system bus 130 by a hard disk drive interface 192, a magnetic disk drive interface 193, and an optical disk drive interface 194, respectively. The drives and their associated computer-readable media provide nonvolatile storage of computer readable instructions, data structures, program modules and other data for the personal computer 100. It will be appreciated by those skilled in the art that other types of computer readable media that can store data that is accessible by a computer, such as magnetic cassettes, flash memory cards, digital video disks, Bernoulli cartridges, random access memories (RAMs), read only memories (ROMs), and the like, may also be used in the example operating environment. A computer-readable medium, as used herein, is intended to include a single medium as well as a collection of physically separate media, such as, for example, a collection of CD ROMs, or a CD ROM in combination with a computer memory.

A number of program modules can be stored on the hard disk drive 170, magnetic disk 190, optical disk 192, ROM 140 or RAM 150, including an operating system 195, one or more application programs 196, other program modules 197, and program data 198. A user can enter commands and information into the computer 100 through input devices such as a keyboard 101 and pointing device 102. Other input devices (not shown) may include a microphone, joystick, game pad, satellite dish, scanner or the like. These and other input devices are often connected to the processing unit 110 through a serial port interface 106 that is coupled to the system bus, but may be connected by other interfaces, such as a parallel port, game port or a universal serial bus (USB). Further still, these devices may be coupled directly to the system bus 130 via an appropriate interface (not shown). A monitor 107 or other type of display device is also connected to the system bus 130 via an interface, such as a video adapter 108. In addition to the monitor, personal computers typically include other peripheral output devices (not shown), such as speakers and printers. In a preferred embodiment, a pen digitizer 165 and accompanying pen or stylus 166 are provided in order to digitally capture freehand input. Although a direct connection between the pen digitizer 165 and the serial port is shown, in practice, the pen digitizer 165 may be coupled to the processing unit 110 directly, via a parallel port or other interface and the system bus 130 as known in the art. Furthermore, although the digitizer 165 is shown apart from the monitor 107, it is preferred that the usable input area of the digitizer 165 be co-extensive with the display area of the monitor 107. Further still, the digitizer 165 may be integrated in the monitor 107, or may exist as a separate device overlaying or otherwise appended to the monitor 107.

The computer 100 can operate in a networked environment using logical connections to one or more remote computers, such as a remote computer 109. The remote computer 109 can be a server, a router, a network PC, a peer device or other common network node, and typically includes many or all of the elements described above relative to the computer 100, although only a memory storage device 111 has been illustrated in Figure 1. The logical connections depicted in Figure 1 include a local area network (LAN) 112 and a wide area network (WAN) 113. Such networking environments are commonplace in offices, enterprise-wide computer networks, intranets and the Internet.

When used in a LAN networking environment, the computer 100 is connected to the local network 112 through a network interface or adapter 114. When used in a WAN networking environment, the personal computer 100 typically includes a modem 115 or other means for establishing a communications over the wide area network 113, such as the Internet. The modem 115, which may be internal or external, is connected to the system bus 130 via the serial port interface 106. In a networked environment, program modules depicted relative to the personal computer 100, or portions thereof, may be stored in the remote memory storage device.

It will be appreciated that the network connections shown are illustrative and other techniques for establishing a communications link between the computers can be used. The existence of any of various well-known protocols such as TCP/IP, Ethernet, FTP, HTTP and the like is presumed, and the system can be operated in a client-server configuration to permit a user to retrieve web pages from a remote web-based server. Any of various conventional web browsers can be used to display and manipulate data on web pages.

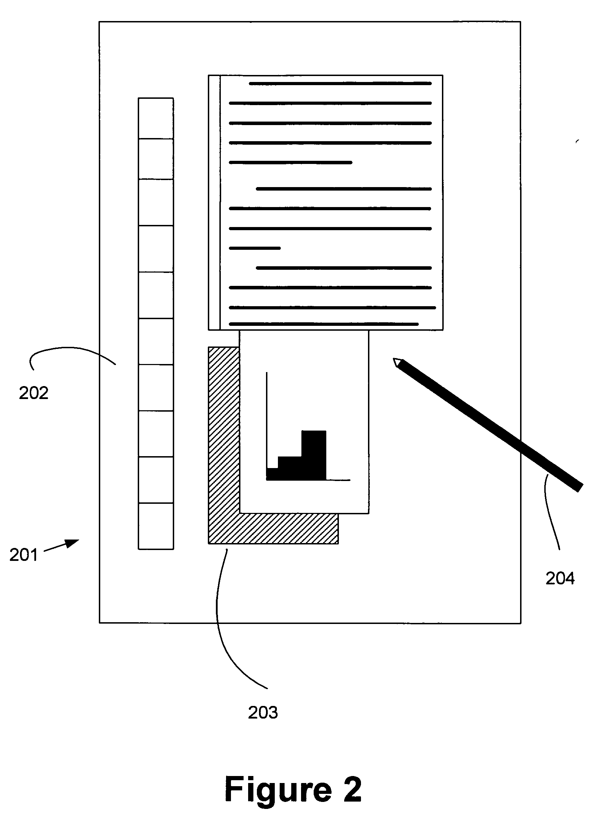

Figure 2 shows an example of a stylus-based computer processing system (also referred to as a tablet PC) 201 that can be used in accordance with various aspects of the present invention. Any or all of the features, subsystems, and functions in the system of Figure 1 can be included in the computer of Figure 2. Tablet PC 201 includes a large display surface 202, e.g., a digitizing flat panel display, preferably, a liquid crystal display (LCD) or OLED screen, plasma display and the like, on which a plurality of windows 203 is displayed. Using the tip of a stylus 204 (the tip also being referred to herein as a "cursor"), a user can select, highlight, and write on the digitizing display area. Examples of suitable digitizing display panels include electromagnetic pen digitizers, such as the Mutoh or Wacom pen digitizers. Other types of pen digitizers, e.g., optical digitizers or touch screens, may also be used. Tablet PC 201 interprets marks made using stylus 204 in order to manipulate data, enter text, and execute conventional computer application tasks such as spreadsheets, word processing programs, and the like.

A stylus could be equipped with buttons or other features to augment its selection capabilities. In one embodiment, a stylus could be implemented as a "pencil" or "pen", in which one end constitutes a writing portion and the other end constitutes an "eraser" end, and which, when moved across the display, indicates portions of the display are to be erased. Other types of input devices, such as a mouse, trackball, or the like could be used. Additionally, a user's own finger could be used for selecting or indicating portions of the displayed image on a touch-sensitive or proximity-sensitive display. Consequently, the term "user input device", as used herein, is intended to have a broad definition and encompasses many variations on well-known input devices.

### User Experience Overview

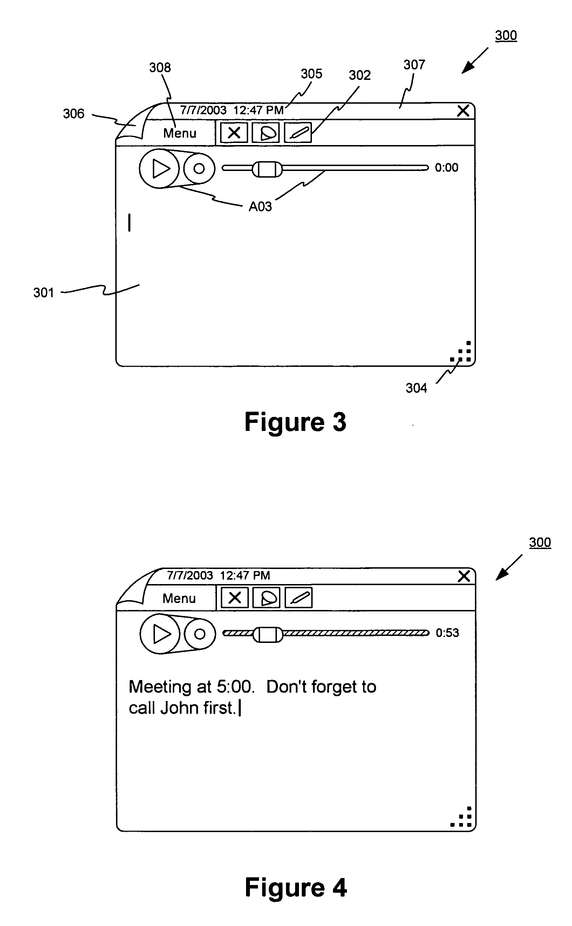

Referring to Figure 3, an electronic sticky note 300, as viewed by the user on, for example, the display surface 202, may include one or more of a variety of features. For example, the electronic sticky note 300 may include a content surface 301, also known herein as a canvas. The canvas 301 may receive and display a variety of types of annotation content such as rich text, simple text, ink, graphics, images, and video, or any combination or subcombination of these types of content. Handwritten ink may be stored and viewed on the canvas 301 as ink and/or as recognized handwriting recognition text. The canvas 301 may also receive files. Thus, a user may attached one or more files to an item through the electronic sticky note 300. A file may appear on the canvas 301 as an icon representing the file (which may be selected and opened) or as the content of the file.

The electronic sticky note 300 may include one or more tool controls 302 that may include one or more drop-down menus and/or tool buttons, an audio recording and/or playback control 303, and/or a window resize thumb 304. The electronic sticky note 300 may further include a caption label 305 that may indicate information about the electronic sticky note 300 such as the date and/or time that the sticky note was created or saved and/or a title associated with the electronic sticky note 300. The electronic sticky note 300 may further include a drag handle 307 and a drop-down menu 308.

Electronic sticky notes may be used as free-floating document windows, and may or may not be attached to or embedded in other items. In fact, electronic sticky notes may be "stuck" to practically any item, which the user can view and/or interact with in the computing environment . This means that a user may be able to annotate anything on the computer using the electronic sticky note itself as the annotation. Electronic sticky notes may physically appear to the user in a way that mimics the look of a paper stuck to the computer screen. For example, electronic sticky notes may appear on the screen with a shadow, and they may be rotatable along a central axis to further simulate a paper attached to the screen. Electronic sticky notes may, when inactive, hide various controls to allow users to focus on their content. Moreover, electronic sticky notes may be customized, such as with user-specified colors and/or backgrounds, to simulate customized paper stationary.

Electronic sticky notes may also be seamlessly moved between items, regardless of the type of item, and seamlessly moved around on the computer screen, such as to different locations on the desktop. For example, an electronic sticky note may be attached to a word-processing document, and easily moved to be instead attached to a spreadsheet document or embedded in a particular Internet web page. Alternatively, for example, an electronic sticky note may be created on the desktop and then easily attached to an item.

The electronic sticky note 300 may stand alone (i.e., not attached to anything), be attached to another item, or be embedded in an item (such as embedded in a document). A "dog ear" 306 or other graphical element may indicate a special area from which a user can initiate an attachment operation. For example, the user may grab the dog ear 306 and drag it around, thereby allowing the user to pick up the electronic sticky note 300 and drag/drop it onto an item to which the electronic sticky note 300 is to be attached. Alternatively, the electronic sticky note 300 may be attached using commands or menu selections. The user may then select the dog ear 306 (e.g., by tapping on it with the stylus 204) to attach or detach the electronic sticky note 300 to/from the underlying item. The underlying item to which the electronic sticky note 300 may be attached may be any type of item, such as a file, a folder, a document, an application, an icon, a link to or other representation of a contact, a hypertext link, the desktop, a conceptual item such as a date on a calendar, an email message, a link to an Internet location such as a favorite location, an item represented in the shell such as a printer or a network machine, or a virtual item such as a database query or result. Attachment and detachment of electronic sticky notes are discussed further herein under the section entitled, "Attaching/Detaching."

In addition, electronic sticky notes may be searched by their content, location, title, handwriting recognition text generated by processing handwritten ink content in the electronic sticky note into text, and/or other aspects and properties of the electronic sticky notes. Searching may be performed for electronic sticky notes regardless of whether they are standalone, attached to an item, or embedded in an item; they may all be equally searchable. Each electronic sticky note may be associated with automatically created metadata organized such that it is usable for searching. The metadata may be derived from the content and/or state of the electronic sticky note. *Creation, Storage, and Deletion ofElectronic Sticky Notes*

An electronic sticky note may be created in a number of ways. For example, a user may create a new electronic sticky note by selecting a "new electronic sticky note" function from an application, such as via a button or drop-down menu in the application. Alternatively, a user may right-click or otherwise call up a contextual menu that includes an option to create a new electronic sticky note. As will be discussed in more detail, the electronic sticky note that is created may be a standalone note, or it may be attached to or embedded in an item. These are known as attachment states. The default attachment state of a newly created electronic sticky note may depend upon the context in which the electronic sticky note is created. For instance, if a user invokes a contextual menu associated with an item such as a document icon, the electronic sticky note created from the contextual menu may be, by default, attached to the document represented by the document icon. The user may accept the default attachment state or choose an alternate attachment state. As another example, if the user invokes a contextual menu on the desktop (such as by right-clicking on the desktop), then the electronic sticky note may be, by default, a standalone electronic sticky note. The discussed ways of creating electronic sticky notes are merely examples; electronic sticky notes may be created in other ways as well.

Electronic sticky notes may be stored as files in one or more defined locations, such as in a predefined folder. The location of a stored electronic sticky note may depend upon whether the electronic sticky note is attached to an item, embedded in an item, or a standalone electronic sticky note. Each electronic sticky note may be stored as an individual file, and the names of the files may be automatically selected or selected by the user. The format of the file may be a binary format or a human-readable format such as text or XML. The content of the electronic sticky note may be converted from binary format to text format, using encoding schemes such as but not limited to Base64 encoding, for purposes of storing in a text or XML file. The files containing the electronic sticky notes may contain additional metadata about the electronic sticky notes, such as but not limited to the name of the person creating the sticky note. The files storing the electronic sticky notes may also contain or otherwise be associated with the states of their respective electronic sticky notes. For example, each file may contain or otherwise be associated with information representing whether its electronic sticky note is opened or closed. The opened or closed state of each electronic sticky note may be maintained even through the computer may be shut down and/or rebooted. The electronic sticky note may be automatically saved when it is closed, the user may be able to explicitly save the electronic sticky note, or the electronic sticky note may be automatically saved when its content changes or irrespective of whether its content changes. Electronic sticky notes may be auto-saved periodically, such as every thirty seconds, or more or less often. Actions that may trigger an automatic save of an electronic sticky note include changing the content, causing the electronic sticky note to lose focus, closing the electronic sticky note, and locking the desktop by the user or by a screensaver.

One of several things may occur in response to an item that an electronic sticky note is attached to being deleted. For example, the attached electronic sticky note may become a standalone electronic sticky note (i.e., not attached to any item). Or, the electronic sticky note may be deleted along with the item. Another possible outcome is that the user may be presented with a dialogue requesting the user to choose whether the electronic sticky note should be deleted or kept as a standalone note. Yet another possibility is that a dialogue may remind the user that an electronic sticky note is attached to the item requested to be deleted, and the user may be asked whether the user is sure that the item should be deleted. Also, how the electronic sticky note is affected by the deletion of the item to which it is attached may be set by the user using, e.g., an options menu.

### User Interface Components

The electronic sticky note 300 may have a number of different tool controls 302 (such as buttons) and/or functions that may be accessible via drop-down menus 308. For example, copy, paste, undo, print, attach, detach, and option tool controls 302 and/or menu 308 functions may be available. Other available tool controls 302 and/or functions in the menu 308 may include "always on top" (which keeps the electronic sticky note 300 as the topmost window), color (which enables the user to set the color of the electronic sticky note 300), and properties (which enables the user to view and/or set various electronic sticky note properties).

Selecting the options tool control may generate a dialog that enables the user to control various settings. Examples of settings include: setting the default color of the electronic sticky note 300, setting the default content mode (e.g., ink or text), turning on/off handwriting recognition, selecting a handwriting recognition language, turning on/off pressure sensitivity of the stylus 204, setting a default ink color, and setting whether to share attached electronic sticky notes to specific files in a runtime extensible list (e.g., photos, documents, contacts). Other examples include configuring default fonts, setting audio quality and maximum recording length, setting the default width and height of the electronic sticky note 300, and setting auto-save frequency. Still further examples include setting a directory in which to store the electronic sticky note 300, configuring email options (for emailing an electronic sticky note), and setting a default location on the display surface 202 where new electronic sticky notes are to be created.

### Content Interaction

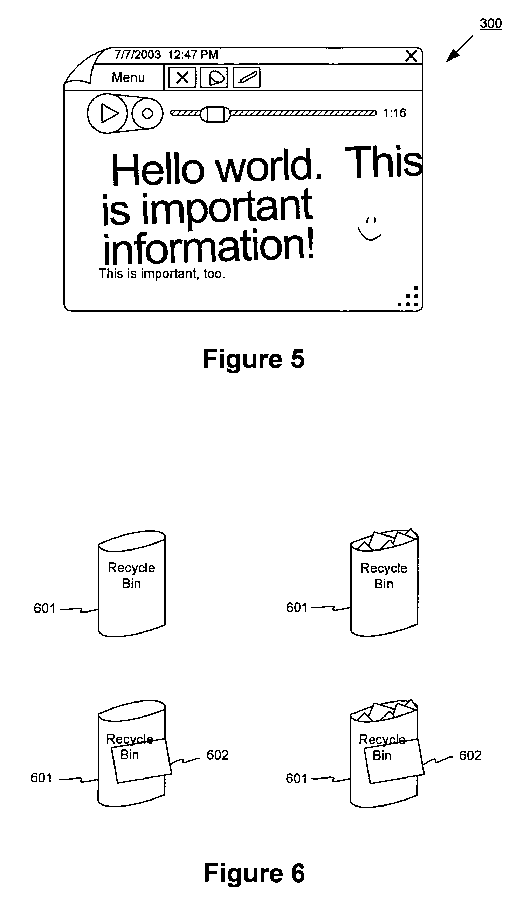

It is preferably intuitive for a user to interact with content on the canvas 301. Depending upon the type of content, the canvas 301 may receive and display the content differently in an intelligent manner. The canvas 301 may receive a variety of content, such as but not limited to text, ink, images (such as shown in Figure I), graphics, animation, audio, and video. A single type of content may be used or a mix of content may be simultaneously supported by the canvas 301. For example, text and ink may co-exist on the same canvas 301 simultaneously, yet independently of one another. Figure 4 illustrates textual content that has been entered onto the canvas 301 using, e.g., the keyboard 101. Figure 5 illustrates ink content that has been entered onto the canvas 301 using, e.g., the stylus 204. Textual content is also co-existing on the canvas 301. The textual content may be entered using, e.g., the keyboard 101. Content may be entered on the canvas 301 (and/or edited) both before and after attaching the electronic sticky note A00 to or embedding it in an item.

There may exist one or more text boxes on the canvas 301 into which text may be entered and edited. The text box may be automatically placed or moved depending upon the location of other content on the canvas 301. For example, a text box may be placed automatically on the canvas 301 so as not to interfere with any existing image. When an image is inserted onto the canvas 301, the text box (and any ink) may automatically move out of the way (e.g., down). The text box and ink may move back up when the image is deleted. When the user converts to text from ink (e.g., using a handwriting recognition tool), the default location of the text box may be after or under any existing ink or image.

Content may be created directly on the canvas 301, such as by typing text onto the canvas 301 into a text box using the keyboard 101, or by drawing ink onto the canvas 101. Also, pre-existing content may be moved or copied from another source onto the canvas 301. For example, content may be copied from various sources such as, but not limited to, a file (e.g., a word processing document or a spreadsheet), a display or screenshot or portion thereof (using a screen capture utility), a web page, an email, or a device such as a digital camera, scanner, or microphone, and pasted onto the canvas 301. Such copying, moving, and pasting may be performed in any manner, such as by GUI selecting, dragging, and dropping actions, or by use of explicit commands. Content that is copied from another source may contain additional metadata or other information that is retained for subsequent use in organizing and/or searching the electronic sticky note. This metadata or other information may or may not be displayed on the canvas 301. Where the metadata or other information is not normally displayed on the canvas 301, it may otherwise be accessible using a different user interface, such as a dialogue box, which may be instantiated from the menu 308 or the like.

### Attaching/Detaching

As previously discussed, electronic sticky notes may be attached to or embedded in various items. The term "item" in connection with the present discussion regarding attachment includes any item that the user may interact with such as, but not limited to, a file, a folder, a document, an application, an icon, a contact, a hypertext link, the desktop, a conceptual item such as a date on a calendar, an item represented in the shell such as a printer or a network machine, or a virtual item such as a database query or result.

The electronic sticky note 300 may be attached to an item, meaning that from the point of view of the user, the electronic sticky note 300 is attached to the "outside" of the item. Comparing an item to a physical book, this may be analogous to, for example, attaching a physical sticky note to the outside cover of the book. When attached to the outside of the item, some or all of the content of the electronic sticky note 300 may be available to the user without opening the item itself. One or more electronic sticky notes may be attached simultaneously to a single item. Also, when the item is moved around (or the icon representing the item is moved around), the attached electronic sticky note may move with the item or item icon. Whether this occurs may be set according to user-selected settings using, e.g., an options menu.

When attached to an item, the representation of the item (e.g., the item's icon) may preferably include an indication that an electronic sticky note is attached to the item. For example, Figure 6 shows an illustrative embodiment of an icon 601 representing a recycle bin as provided by Microsoft's WINDOWS brand operating system. The basic icon 601 is shown as being empty and full in the upper left and right, respectively, of the figure. When an electronic sticky note is attached to the recycle bin, the icon 601 may include an indication 602 of the electronic sticky note. To include such an indication, the icon 601 may be modified to include such an indication, totally replaced with an alternate icon that includes such an indication, or overlaid with such an indication, in order to indicate the existence of an electronic sticky note attached thereto. Although the icon 601 is shown as a recycle bin icon, the icon 601 may be an icon for any type of item, such as but not limited to a document.

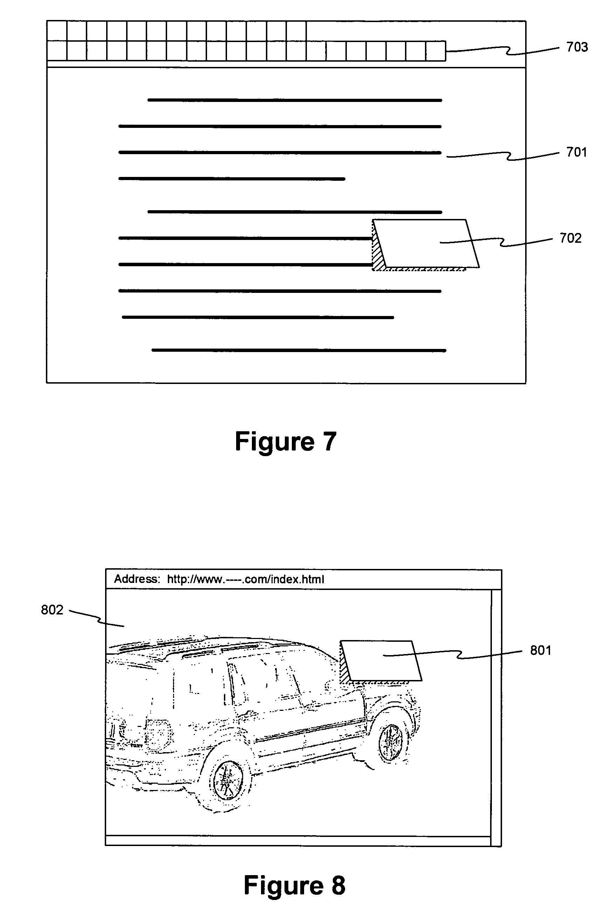

The electronic sticky note 300 may alternatively or additionally be attached in an item (i.e., embedded in an item), meaning that from the point of view of the user, the electronic sticky note 300 is attached to the "inside" of the item. Again comparing an item to a physical book, this may be analogous to, for example, attaching a physical sticky note to a page in the book. One or more electronic sticky notes may be embedded simultaneously in a single item. In some embodiments, the existence of the electronic sticky note 300 attached in an item, and/or the content of the electronic sticky note 300, may be available to the user only after the item has been opened or previewed. In further embodiments, the existence and/or content of the electronic sticky note 300 may be available to the user without opening or previewing the item. The representation of the item (e.g., the item's icon) may or may not include an indication that an electronic sticky note is embedded in the item. For example, Figure 7 shows an open document 701 (e.g., a word processing document) upon which a graphical indication 702 (such as an icon or thumbnail representation of the electronic sticky note) of an electronic sticky note is located. The dark horizontal lines in the document 701 represent content of the document (e.g., text, images, and/or graphics). By selecting the graphical indication 702 (e.g., by double-clicking, right-clicking it, or using some other way such as using keyboard commands), the associated electronic sticky note may be opened and/or its contents viewed, resulting in a view such as that shown in Figure 5. By dragging and dropping the graphical indication 702, its location within the document may be altered.

As another example of embedding an electronic sticky note in an item, Figure 8 shows an Internet web page 802 in a browser window, this time with a graphical indication 801 (such as an icon) indicating a location of an electronic sticky note attached to the web page 802. The Internet web page 802 may be generated remotely such as by a remote web server, and accessed by the user's computer via an Internet connection. Although the user may not be able to actually modify the original Internet web page 802, the user may nevertheless add electronic sticky notes to the Internet web page 802 as viewed by the user at the user's own computer. The user may simply create and electronic sticky note, or drag-and-drop an existing electronic sticky note, onto the web page 802 and position it on the web page 802 as desired. This causes the graphical indication 801 to appear where the user desires. The user's computer may locally store associating information that associates the electronic sticky note and/or the graphical indication 801 with the Internet web page 802. The associating information may further associate the electronic sticky note and/or the graphical indication 801 with the particular location on the Internet web page 802 that the user attached the electronic sticky note. The next the time the user browses to that same web page 802, the graphical indication 801 would appear where the user last placed it, in accordance with the locally-stored associating information. By selecting the graphical indication 801 (e.g., by double-clicking or right-clicking it), the associated electronic sticky note may be opened and/or its contents viewed, resulting in a view such as that shown in Figure 5. By dragging and dropping the graphical indication 801, its location within the web page may be altered.

The electronic sticky note 300 may further exist on the desktop. In this case, the electronic sticky note may be treated like an item in and of itself, with its own graphical representation (e.g., its own icon). The user may be able to interact with the graphical representation of the electronic sticky note 300 by dragging, dropping, and opening it, just like other items. The electronic sticky note 300 may further be located within a file folder. This may be considered another state of existence. However, this may alternatively be considered to be embedding the electronic sticky note 300 in the folder, since the folder may be considered an item.

Thus, electronic sticky notes may have various attachment and existential states. The electronic sticky note 300 may be moved between states using drag/drop techniques and/or using menu functions. To move between states, the electronic sticky note 300 may be detached from an item (if it is already attached to or in an item) and then attached to an item, embedded in an item, and/or it may become a standalone note, as desired. A user may move the electronic sticky note 300 between states and within items just as easily as they can take a physical paper sticky note and stick it to a paper document or to the outside of a folder or their desk. The electronic sticky note 300 may be moved from any state to any state. For example, the electronic sticky note 300 may be embedded in a first item, and may be moved so as to be embedded at another location in the first item, embedded in a different second item, attached to the second item, or attached to the desktop. As another example, the electronic sticky note 300 may be attached to the desktop, and may thereafter be detached from the desktop and re-attached to an item or embedded in an item. Any combination of moving between items, moving within items, and moving between states, is within the scope of this discussion.

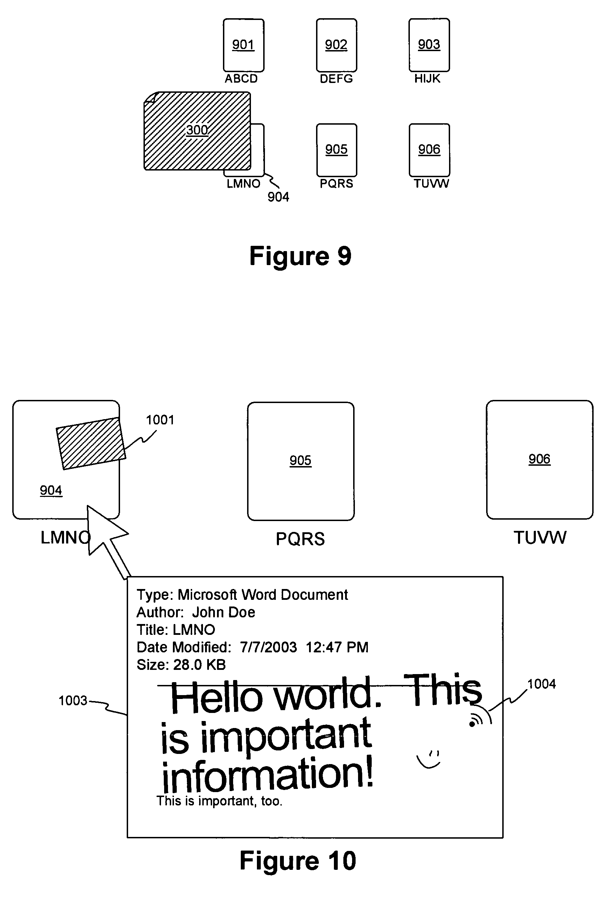

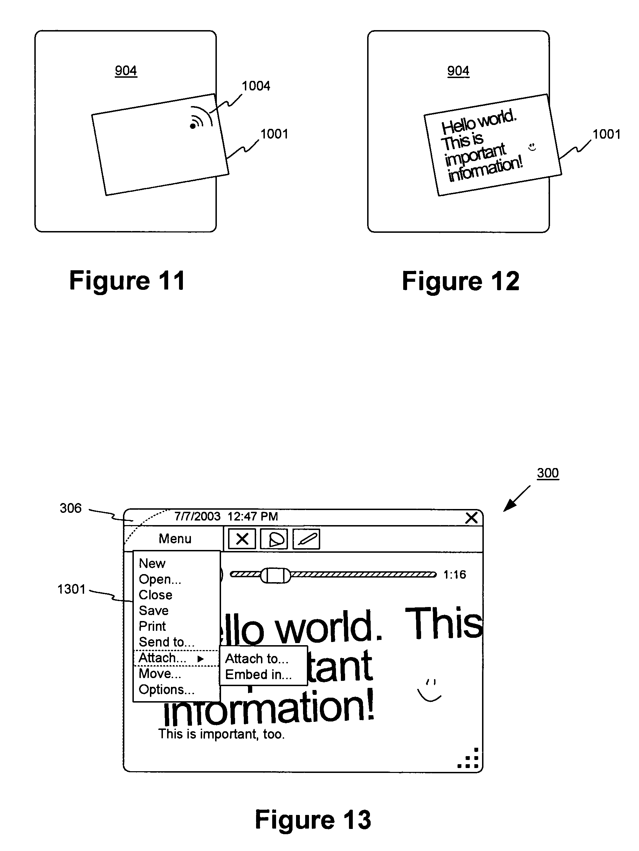

Figures 9 and 10 show an example of how the electronic sticky note 300 may be attached to an item 904. In Figure 9, several items 901 - 906 are shown to exist, represented by icons. The items 901 - 906 may be any type of items, such as documents. Here, the user drags the electronic sticky note 300 (or its associated icon) over one of the items 904. When the user drops the electronic sticky note 300 over the item 904, the electronic sticky note 300 may become attached to the item 904. This may be indicated, as shown in Figure 10, by causing the icon representing item 904 to be modified to include a representation 1001 of an attached electronic sticky note. The visual appearance of the representation 1001 may depend upon the content, size, shape, color, and/or other properties of the attached electronic sticky note 300. For example, the representation 1001 may be of the same color as the electronic sticky note 300 (as shown in these figures using hash marks). As another example, as shown in Figure 11, where the electronic sticky note 300 includes audio, the representation 1001 may include an indication 1004 that audio content is included in the electronic sticky note 300. Also, as shown in Figure 12, the representation 1001 may further include a thumbnail version of viewable content of the electronic sticky note 300.

Referring back to Figure 10, the content of the electronic sticky note 300 may be viewed and/or previewed by selecting the item 904. For example, by hovering over the item 904, a pop-up window 1003 may appear including some or all of the content of the electronic sticky note 300. The contents of the electronic sticky note 300 may be rendered translucently over other items being previewed in the window 1003. For example, if an image with an attached electronic sticky note is being previewed using a tooltip, then the tooltip may contain a preview of the image with a translucent electronic sticky note displayed over the preview of the image. The window 1003 may further include the indication 1004 that audio is included in the electronic sticky note 300. If the user selects the indication 1004, the user may listen to the audio content. The window 1003 may further include active controls to control playback of the audio. Although the window 1003 is discussed herein as being responsive to hovering over the item 904, other selection methods may be used, such as by right-clicking on, or otherwise selecting, the item 904.

When dragging/dropping the electronic sticky note 300 (or its representative icon) onto another item, the "dog ear" 306 or other graphical element may indicate a special area from which a user can initiate an attachment operation. For example, the user may grab the electronic sticky note 300 and drag/drop it onto an item to which the electronic sticky note 300 is to be attached. The user may then select the dog ear 306 (e.g., by tapping on it with the stylus 204) to attach or detach the electronic sticky note 300 to/from the underlying item. The dog ear 306 is shown in the upper left comer of the electronic sticky note 300. However, the dog ear 306 may be located anywhere on the electronic sticky note 300 (e.g., at any of the comers or even along a side), and the dog ear 306 may take a completely different form than a dog ear. For example, the dog ear 306 may instead be an icon, a selectable button, or some other graphical representation located somewhere on or near the electronic sticky note 300.

Where the item is a calendar, the electronic sticky note 300 may be explicitly attached to a particular date and/or time, such as by dragging/dropping the electronic sticky note 300 (or its representative icon) onto the date. The electronic sticky note 300 may further be implicitly attached to a particular date and/or time by setting a reminder function on the electronic sticky note 300 (such as through the drop-down menu 308), such that the electronic sticky note 300 becomes automatically attached to the calendar date and/or time. In addition, the content of the electronic sticky note 300 may be automatically or manually repurposed. For example, attaching the electronic sticky note 300 to a calendar may automatically generate a reminder in the calendar, where the reminder may include some or all of the content of the electronic sticky note 300. Thus, the content of the electronic sticky note 300 has been automatically repurposed as reminder content. More generally, the electronic sticky note 300 may cause certain actions to occur depending upon what it is attached to. Another example is where the attachment of the electronic sticky note 300 to an action item in a task list may cause a reminder to be generated depending upon when the task is due, wherein the reminder may include some or all of the content of the electronic sticky note 300. As yet another example, attaching the electronic sticky note 300 to a contacts lists may cause some or all of the content in the electronic sticky note 300 to be converted into a contact in the contact list. Repurposing may include parsing and/or other interpreting of the content in order to determine whether the particular content makes sense to be repurposed in a particular way, to ensure the format of the content is compatible with the target, and/or to extract certain information from the content (e.g., separately extract the name, address, and phone number where the content is to be converted to a contact). Repurposing may be automatic as described above or may be manual, such as via a menu item or keyboard command.

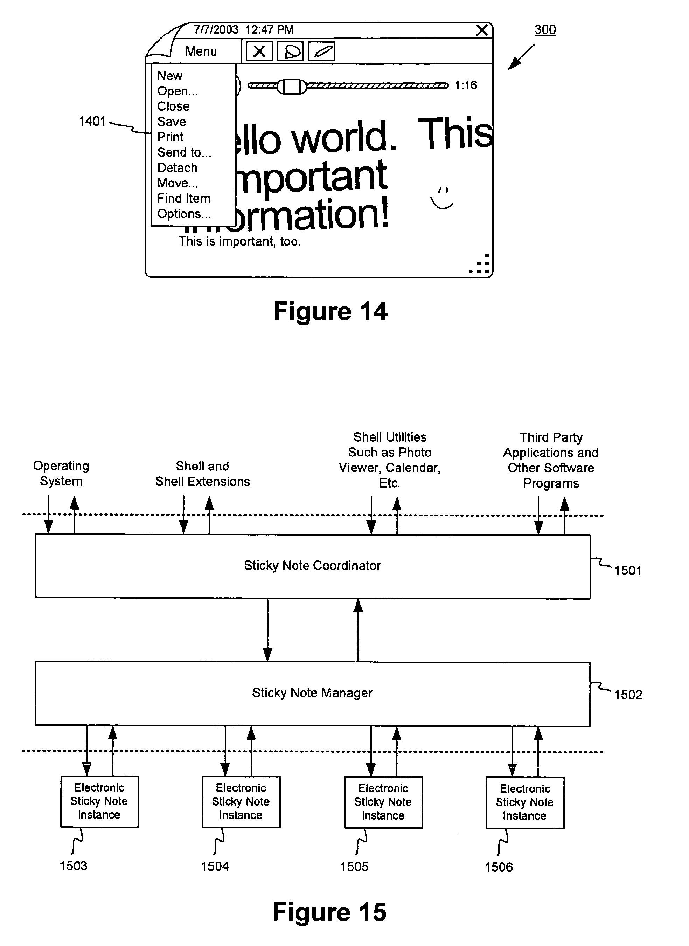

There may be many ways available to the user to attach the electronic sticky note 300 to an item or to detach the electronic sticky note 300. In addition to the drag/drop implementation already discussed, one or more menus may be used to access the attach and/or detach function. For example, Figure 13 shows the electronic sticky note 300 (currently detached, as shown) including an expanded drop-down menu 1301 that has, among other functions, an attach function. As shown, the selecting the attach function may further allow the user to determine whether the electronic sticky note 300 is to be attached to a target item or embedded in an item. The target item may be by default an item that underlies the electronic sticky note at the time of attachment, or the target item may be selected through a dialog for browsing items. Another way to attach an electronic sticky note to an item may be, for example, to "right click" or otherwise select the item, causing a list of options to appear, such as in a context-sensitive menu, and selecting "attach sticky note" from the list of options. Then, through a dialog, the user may be provided the option of either creating a new electronic sticky note for attachment to the item, or selecting an existing electronic sticky note. Yet another way to attach an electronic sticky note may be, for example, to copy an existing electronic sticky note (e.g., using control-c or a copy function), and then pasting the copy of the electronic sticky note onto an existing item (e.g., using control-v or a paste function). Figure 14 similarly shows an attached electronic sticky note 300 including an expanded drop-down menu 1401 that has, among other functions, a detach function.

Electronic sticky notes may, in appropriate situations, be automatically attached to or in items by the operating system without the user explicitly attaching an electronic sticky note. For example, many digital cameras support taking a voice memo (also known as a voice note or voice annotation) along with a digital photo. The cameras typically store the voice memo as a separate audio file that may or may not be explicitly linked to the corresponding photo file, such as by including a reference to the corresponding photo file. Both files may have the same filename but different prefixes (e.g., ABC001.jpg and ABC001.wav). When such voice-annotated photos are copied onto the user's computer (e.g., computer 100), the audio file may be automatically converted into an electronic sticky note containing some or all of the audio content from the audio file, and the resulting electronic sticky note may then be programmatically attached to the corresponding photo file. Alternatively, a new photo file may be created (which may be a replica of the original photo file) and the electronic sticky note attached to the new photo file. Thus, a single photo file may be produced with an attached electronic sticky note containing the voice annotation to the photo. In one embodiment, the electronic sticky note may be attached by writing the information of the electronic sticky note into a header area of the photo file such that the actual electronic sticky note data is embedded inside the photo file. In such a case, the content of the photo image would not be modified by the electronic sticky note. The user could still manually create an electronic sticky note with voice or other content and manually attach the electronic sticky note in or to the photo file. As another useful way to manage photos with electronic sticky notes, a user may scan both the front and back of a physical photograph, wherein the scanned back of the photograph is entered as content into an electronic sticky note attached in or to the photo file representing the scanned front of the photograph.

Electronic sticky notes may be similarly embedded in files using the above-discussed methods of attachment. For example, the electronic sticky note 300 may be dragged and dropped onto a particular portion of an open document. Also, application windows may include one or more functions that allow the user to interact with electronic sticky notes. For example, in Figure 7, a toolbar 703 may be included in an application window, where the toolbar 703 may include one or more functions that allow creation and/or manipulation of electronic sticky notes. By selecting one of the tools from the toolbar 703, the user may be able to create, move, and/or embed an electronic sticky note into the document 701. The toolbar 703 may also be used to attach an electronic sticky note to, rather than embed it in, the document 701.

### Electronic Sticky Note Management, Interfacing, and Integration

Referring to Figure 15, an illustrative architecture including a "sticky note coordinator" 1501 is shown. Some or all of the architecture shown in Figure 15 may be part of and/or implemented by the operating system 195, one or more of the application programs 196, and/or one or more of the other program modules 197 in Figure 1. Within this illustrative architecture, for purposes of software performance, and for purposes of minimizing the resources consumed by sticky notes, all displayed electronic sticky notes are part of a single executing process (also referred to herein as the "primary electronic sticky note process") including a "sticky note manager" 1502 and a plurality of electronic sticky note instances 1503-1506. The sticky note manager 1502 in this embodiment is part of the single process that controls and manages the display of the individual (child) electronic sticky notes. However, the sticky note manager 1502 may be a system service or run inside the shell. The sticky note manager 1502 communicates with each electronic sticky note instance 1503-1506 and coordinates and/or controls their behaviors once they have been instantiated. The sticky note manager 1502 may, as appropriate, display and hide electronic sticky notes, both attached and detached. The sticky note manager 1502 may further maintain a list of existing electronic sticky notes in a particular storage location or locations and use this list for providing information about electronic sticky notes, such as notifying other applications or the operating system shell about which electronic sticky notes are currently visible or not visible, and the like. When the user desires to create new electronic sticky notes, the new electronic sticky notes may be created as children (e.g., as child windows) of the single process.

The sticky note coordinator 1501 is a module that is configured to communicate with the primary electronic sticky note process in the shell, and to expose an interface allowing tertiary applications to interact with the primary electronic sticky note process. When another application desires to programmatically create a new electronic sticky note, the other application may link to the sticky note coordinator 1501 and use an application programming interface (API) to create and/or interact with the electronic sticky notes. Additionally, interaction with electronic sticky notes may be made convenient and straightforward for application developers. The sticky note coordinator 1501 may interface with portions of the shell, one or more shell extensions, one or more shell utilities, one or more independent software applications, and/or one or more handlers or viewers for specific document or other file types, such as photo files.

Figure 15 also shows a plurality of electronic sticky note instances 1503 - 1506 that are called by the sticky note manager 1502. Each electronic sticky note instance 1503 - 1506 represents an individual electronic sticky note. Each electronic sticky note instance 1503 - 1506 may be responsible for creating a window (in a windows-based system) in which to host one or more software controls or other components that provide the functionality of an electronic sticky note. Each electronic sticky note instance 1503 - 1506 may further contain any logic needed for various user interactions, animations, fading in/out, and other display features. When an electronic sticky note is dragged, resized, closed, or periodically auto-saved, the associated electronic sticky note instance implementation may be responsible to ensuring that these functions are appropriately handled.

Applications may communicate with the sticky note manager 1502 via the sticky note coordinator 1501. Examples of various external interfaces that may exist are shown in Tables 1 and 2 (merely illustrative).

**Table 1 -**

| Examples of Methods | |
|---|---|
| void ShowStickyNote(StickyNoteLoca tion Location, float x,float y) | ShowStickyNote is the primary function used to display an existing note. The note specified will be opened and displayed to the user at the requested coordinates. It can also be used to create a new default electronic sticky note. Developers who wish to set the parameters of their electronic sticky note should use CreateStickyNote. |
| | |
| | Parameters: Location - The StickyNoteLocation identifying the electronic sticky note to be displayed. If the note does not already exist, it will be created. X - The X coordinate of the upper left comer which the note should be displayed at. If these are set to -1, the manager will decide the location. Y - The Y coordinate of the upper left comer which the note should be displayed at. If these are set to -1, the manager will decide the location. |
| | Return Values: None |
| void HideStickyNote(StickyNoteLocat ion Location) | HideStickyNote will close a note that is already displayed. If the note is not currently open, this call will have no effect. |
| | |
| | Parameters: Location - The StickyNoteLocation identifying the electronic sticky note to hide. |
| | |
| | Return Values: None |
| StickyNoteLocation CreateNewStickyNote(CreateNe wStickyNoteArgs args) | CreateNewStickyNote is the primary method of creating a new Sticky Note. |
| | |
| | Parameters: args - The structure containing the parameters used for creating the new sticky note. Any properties not set on args will be interpreted as a request to use a default. |
| | |
| | Return Values: CreateNewStickyNote returns the StickyNoteLocation of the electronic sticky note it just created. |
| void DeleteStickyNote(StickyNoteLoc ation FSLocation) | DeleteStickyNote will delete the specified sticky note. |
| | |
| | Parameters: Location - The StickyNoteLocation identifying the electronic sticky note to delete. |
| | |
| | Return Values: None |
| void AttachStickyNoteToItem(StickyN oteLocation Source, string Dest) | AttachStickyNoteToItem will attach an existing sticky note to the specified item. For example, it is used to attach a sticky note to a file specified by a users drag/drop operation. |
| | |
| | Parameters: Source - The StickyNoteLocation identifying the electronic sticky note to attach. Dest - The string representation of the item the electronic sticky note should be attached to. Typically, this is a full path to a file. |
| | |
| | Return Values: None |
| void LockStickyNotes() | LockStickyNotes informs electronic sticky notes that there is a caller that does not want stickynote.exe to exit normally. This would commonly be used by an application that wanted to create several electronic sticky notes, but not display them to the user. Normally stickynote.exe unloads itself whenever a Sticky Note is not currently being displayed. UnlockStickyNotes should be called the same number of times LockStickyNotes is called. Otherwise, stickynote.exe will not unload. |
| | |
| | Parameters: None. |
| | |
| | Return Values: None |
| void UnockStickyNotes() | UnlockStickyNotes is used to inform electronic sticky notes that the caller is done with the acquired lock. UnlockStickyNotes should be called the same number of time LockStickyNotes is called. Otherwise, stickynote.exe will not unload. |
| | |
| | Parameters: None. |
| | |
| | Return Values: None |

**Table 2 -**

| Examples of Argument Classes and Enumerations | |
|---|---|
| StickyNoteLocation { String Path Bool UseFileProperty } | Path - Specifies the file path associated with a file. Normally this is the path to a stand alone sticky note. If UseFileProperty is true, then it is the file that the electronic sticky note is attached to. If an invalid path is specified, a PathException will be thrown. UseFileProperty - Specifies if the FileProprty store should be used. This is the default method of attaching an electronic sticky note to a file rather than having it be stand alone. The members of StickyNoteLocation are normally set via its constructor: public StickyNoteLocation(string Path, bool PropertyStore) |
| ShowStickyNoteArgs | ShowStickyNoteArgs is the class representing the arguments that a caller can pass to ShowStickyNote. Its properties are normally set via the constructor: public ShowStickyNoteArgs(StickyNoteLocation FSLocation, float x, float y). |
| | |
| StickyNoteLocation Location | The StickyNoteLocation specifying which sticky note is to be displayed. If this property is not set then the electronic sticky note will be created as a stand alone file. Its file name will be a string representation of the current date and time. The path of the file may be, e.g., the user's my documents directory\my notes\sticky notes. |
| | |
| float Left | The X coordinate of the upper left comer which the electronic sticky note should be displayed at. If these are set to -1, the manager will decide the location. |
| | |
| float Top | The Y coordinate of the upper left comer which the electronic sticky note should be displayed at. If these are set to -1, the manager will decide the location. |
| HideStickyNoteArgs | HideStickyNoteArgs is the class representing the arguments that a caller can pass to HideStickyNote. Its properties are normally set via the constructor: public HideStickyNoteArgs (StickyNoteLocation Location). |
| | |
| StickyNoteLocation Location | The StickyNoteLocation specifying which sticky note is to be displayed |
| CreateNewStickyNoteArgs | CreateNewStickyArgs is the class specifying the arguments to CreateNewStickyNote. It is normally created via its constructor CreateNewStickyArgs(). The desired properties are then set manually. The rest are assumed to be default values. |
| | |
| StickyNoteLocation Location | The StickyNoteLocation specifying which sticky note is to be displayed. If this property is not set then the electronic sticky note will be created as a stand alone file. Its file name will be a string representation of the current date and time. The path of the file may be, e.g., the user's my documents directory\my notes\sticky notes. |
| | |
| int Left | The X coordinate of the upper left comer which the electronic sticky note should be displayed at. If these are set to -1, the manager will decide the location. |
| int Top | The Y coordinate of the upper left comer which the electronic sticky note should be displayed at. If these are set to -1, the manager will decide the location. |
| int Width | The width requested for the new electronic sticky note. |
| int Height | The height request for the new electronic sticky note. |
| Image BackgroundImage | The image to be used as the background for a new electronic sticky note. The default is to have no image for the background of the electronic sticky note. |
| string ImageFileName | A path to a file containing the data to be as the background image for the electronic sticky note. This parameter is ignored if BackgroundImage is set. Can be any type of image file such as JPEG or bitmap. There is no default file for this parameter. |
| string Base64Audio | The base64 string encoded version of audio data to be associated with the stickynote. Audio can be in any format such as WAV or Microsoft WINDOWS brand Media Player format, etc. The default is to have no audio associated with an electronic sticky note. |
| string AudioDataFileName | A path to an audio file containing the audio data to be associated with the electronic sticky note. This parameter is ignored if AudioDataFileName is set. There is no default file for this parameter. |
| color Color | The background color of the new electronic sticky note. |
| bool CreateOnly | If this bool is set to true, the electronic sticky note will be created on the filesystem, but not displayed to the user. The default is to display the electronic sticky note to the user. |
| string Base64Ink | The base64 string encoded version of an ISF (ink serialization format) stream. If set this specifies the ink initially contained in the electronic sticky note. The default is for no ink to be displayed initially. |
| stringText | The initial text to be displayed inside the sticky note. The default is for no text to be initially displayed. |
| | |
| string ContextURI | A URL to display in the lower left corner of the electronic sticky note. By default no there is no ContextURI. |
| | |
| string ContextMetaData | A string containing any data to be saved as context for the electronic sticky note. This is not displayed to the user but is searchable. By default there is no ContextMetaData. |
| | |
| DateTime CreationTime | Sets the creation time of a sticky note. By default this is DateTime.Minvalue |
| | |
| DateTime ModificationTime | Sets the last modified time for an electronic sticky note. By default this is DateTime.Minvalue |
| | |
| string Caption | A caption to be displayed in the title bar of the electronic sticky note. By default, this is the creation time of the electronic sticky note. |

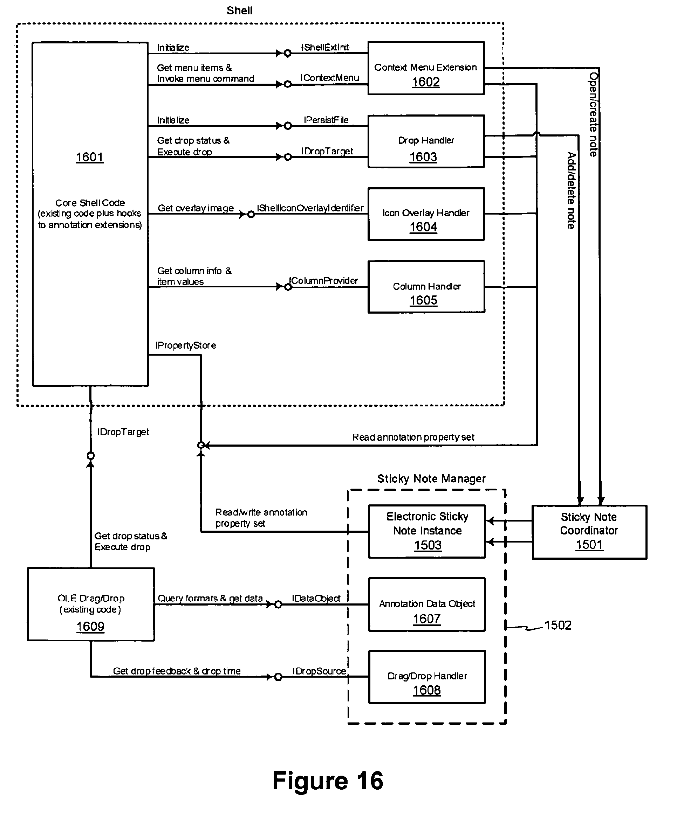

Referring to Figure 16, a functional block diagram is provided of illustrative shell extensions and their interfaces to the shell and the sticky note manager. Some or all of the elements shown in Figure 16 may be part of and/or implemented by the operating system 195, one or more of the application programs 196, and/or one or more of the other program modules 197. A shell process 1600 may include core shell code 1601, which includes typical shell code in additional to various hooks to electronic sticky note annotation extensions. Core shell code 1601 may interface with a context menu extension 1602, a drop handler 1603, an icon overlay handler 1604, and a column handler 1605, all part of the shell process. The shell process 1600 may interface with the sticky note manager 1502, which may includeone or more electronic sticky note instances 1503, an annotation data object 1607, and a drag/drop handler 1608. Both the shell process 1600 and the sticky note manager 1502 may further interface with drag/drop code 1609.

Attachment of electronic sticky notes may be based on Object Linking and Embedding (OLE) or other standard drag-drop mechanisms for transferring data from a source component to a destination component via mouse or stylus action. The source may be the sticky note manager 1502. The destination may be the shell core code 1601 or a separate drop handler component 1603 registered with the shell. The passed data object may be created by the sticky note manager 1502 and may contain a file path of a stand-alone electronic sticky note or may contain a serialized representation of the electronic sticky note content. For added flexibility, the data object may also specify the drop handler 1603 to be used, overriding the default shell handler. When the user initiates a drag-drop operation, the sticky note manager 1502 may create a data object and pass it to the OLE drag-drop coordinator 1609. The OLE drag-drop coordinator 1609 may call the drop-handler 1603 whenever the user moves the cursor and query whether the cursor is over a valid drop target. The drop handler 1603 may determine this by checking properties of the object under the cursor, such as whether it is a read-only file or already has a maximum number of electronic sticky notes attached. The OLE drag-drop coordinator 1609 will then inform the sticky note manager 1502 whether there is currently a valid target. The sticky note manager 1502 may respond by displaying one of a set of cursor images to the user which conveys the target status. The images may be thumbnails of the electronic sticky note with superimposed symbols such as checkmarks or X's to indicate valid and invalid targets. If the user completes the operation by dropping the data over a valid target, the OLE drag/drop coordinator 1609 notifies the drop-handler 1603. The drop handler 1603 then may associate the electronic sticky note content with the target item, such as by storing the content in the target item.

An attached electronic sticky note may be stored in an extended property set on the owner object. The content of the electronic sticky note, which may be expressed in XML, may be serialized to a stream property. Electronic sticky note attributes that must be exposed for queries (e.g., author, date, importance) may be replicated in separate properties in the same property set. The properties may be accessed through a common property interface provided either by the core shell code 1601 for standard file types, or by a custom property handler component registered with the shell to handle specific file types. For certain file types, such as OLE structured documents, the property store may reside in the file itself. For other file types, the property store may be stored in an associated file stream provided by the file system, or in a separate database. Helper code to access the property set may be exposed by methods on the sticky note manager 1502.

In the illustrative embodiment shown, the core shell code 1601 has an existing interface, IContextMenu, for extending context menus. Annotation code added to the core shell code 1601 may provide the context menu extension 1602 with this interface as well as a second interface, IShellExtInit. Before displaying a context menu, the core shell code 1601 calls IShellExtInit interface to pass the context menu extension 1602 a reference to selected object(s). Then, the core shell code 1601 calls the IContextMenu interface to allow the context menu extension 1602 to add items to the menu. The context menu extension 1602 checks for an annotation property set on the selected object. If an annotation property set is found, the context menu extension 1602 adds a "View electronic sticky note" menu item, otherwise it adds an "Attach electronic sticky note" item. When either of these items are selected, the context menu extension 1602 is called back through the IContextMenu interface. The context menu extension 1602 calls the sticky note coordinator 1501, which in turn calls the sticky note manager 1502 to display or create an electronic sticky note, and passes the electronic sticky note a reference to the selected object.

The core shell code 1601 further has an exiting interface, IColumnProvider, for defining new columns for a detailed view. The detailed view is, in an illustrative embodiment, a view presented when the shell displays a list of files or other items, one of the items having an electronic sticky note attached thereto. The detailed view may be extended using the IColumnProvider interface to provide additional information about the listed items and/or their corresponding electronic sticky notes. The core shell code 1601 may provide this interface to the column handler 1605. The IColumnProvider interface is called when the core shell code 1601 opens a folder and when each line of the detailed view is built. The core shell code 1601 initially calls the column handler 1605 to obtain the attributes of the new column (e.g., name, width, value type). If, for example, an electronic sticky note column is displayed, the core shell code 1601 calls the column handler 1605 to obtain additional information for each object. The column handler 1605 checks whether the specified object has an attached electronic sticky note, and returns the appropriate additional information.

The icon overlay handler 1604 is a shell extension that is used to provide a visual indicator for items that have attached electronic sticky notes. The icon overlay handler 1604 may display a small image of an electronic sticky note (or some other visual indicator), such as the representation 1001 shown in Figure 10. The icon overlay handler 1604 may be called each time the core shell 1601 displays an item icon. The icon overlay handler 1604 may check the item for an annotation property and return a Boolean value indicating whether or not the indicator (e.g., representation 1001) should be displayed. A second indicator may be available in a detailed view of a shell folder. A detailed view may contain, for example, one row for each object in the folder and a set of columns that display item properties. For example, a column may indicate that an electronic sticky note is attached to the item.

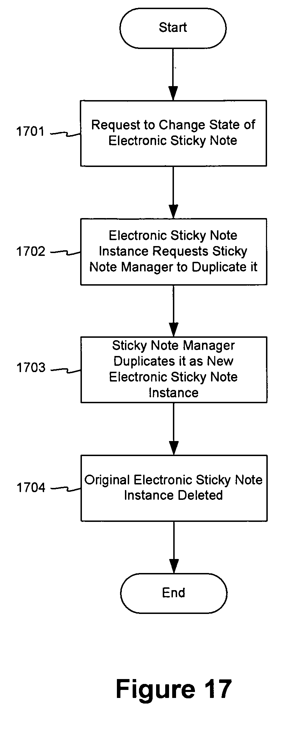

The electronic sticky note 300 may be presented to the user as a window hosting user interface elements 302-308, as shown in Figure 3. Alternatively, the electronic sticky note 300 may be presented to the user as a window hosting a single electronic sticky note control, referred to herein as "Sticky Note Bubble", or "Bubble" for short. What the user thus perceives to be an electronic sticky note msy actually be a window hosting a Sticky Note Bubble control. It is common software engineering practice to design and create software controls for providing pre-packaged functionality for re-use within larger applications. A Sticky Note Bubble control may similarly be used to provide electronic sticky note functionality that can be hosted or incorporated within larger applications. Thus, when an electronic sticky note (as represented by representation 702) is created on the open document 701, one possible implementation may involve hosting a Sticky Note Bubble control within the application that is displaying the open document 701. By thus encapsulating the majority, or at least some, of the functionality of an electronic sticky note into a hostable control, the various attachment states of electronic sticky notes (such as the stand-alone state and the embedded state) may thus be implemented as described above. Moreover, by implementing mechanisms for allowing the various instances of electronic sticky note controls to communicate with each other and allowing passing data between instances, an electronic sticky note may be made to transition between the various attachment states described previously. For example, and referring generically to Figure 17, when a user selects to move an electronic sticky note represented by 702 from the surface of the document 701 to the desktop (step 1701), the underlying software code in the electronic sticky note 702 would communicate with the sticky note coordinator 1501 and request that a duplicate instance of itself be created by the sticky note manager 1502 (step 1702). Once the sticky note manager 1502 successfully creates a new sticky note instance 1503 that exactly replicates the data in 702 (step 1703), the original electronic sticky note control (and its visible representation 702) may delete itself (step 1704). From the users' perspective, it would seem as if the embedded electronic sticky note 702 "detached" itself from the document 701 and transformed into a stand-alone electronic sticky note. In fact, by implementing the appropriate visual effects, this transition process may appear to the user to be nearly or completely seamless.

The Sticky Note Bubble control may have a plurality of user interface elements such as buttons, content input areas, and/or other elements, that allow the creation and rendering of ink, voice, text, and/or other forms of annotation. These user interface elements may be customizable by application developers. An application hosting the Sticky Note Bubble control may programmatically turn off portions of the user interface and/or customize the look and feel of the Sticky Note Bubble (e.g., by changing its color, size, and transparency). Physical attributes resulting from such customization (such as color) may be persisted in the content of the Sticky Note Bubble so that the content is exactly recreated in its next session or when it is physically transferred between states, applications, and/or even machines. An illustrative list of Sticky Note Bubble user interface elements is described in Table 3.

**Table 3 -**

| Examples of Sticky Note Bubble User Interface Elements | |
|---|---|
| Close Button (302) | Initiates a Save. Causes a notification to be sent to the parent. Closes the bubble. |
| Dropdown Button (302) | Shows a Menu (1301 or 1401) |
| Clear Button (302) | Clears the Bubble contents. Causes a notification to be sent to the parent. |
| Audio Toggle Button (302) | Enabled if Bubble has Audio data and/or if system audio defaults will enable recording audio. Clicking the button shows/hides the audio controls. |
| Input Mode Button (302) | Hidden if Bubble cannot load inking system |
| Caption Label (305) | Shows the Caption for the Bubble. If no Caption is specified, shows the Creation time for the Bubble. |
| Resize Thumb (304) | Allows resizing the Bubble. Bubble will enforce a minimum resize size (which will be a size that allows all user interface elements to still paint without overlapping). Thumb auto-hides when the Bubble is inactive. |
| Drag Bar (307) | Allows moving/dragging of the Bubble. Follows system theme. |
| Audio Panel (303) | For Audio record and playback. If Bubble has Audio Data, the panel is shown by default, otherwise it is hidden. |
| Big Button (303) | Enabled Play button if Bubble has Audio Data. |
| Small Button (303) | Enabled Record button if there is a valid record device in the system. |
| Audio Slider (303) | Enabled if Bubble has Audio Data. Seek audio clip. |
| Audio Info Text (303) | Current audio clip position. |
| Menu (308) | Option menu. Replaceable by Bubble's host application. |
| Content Canvas (301) | Host Text Box and Ink Control. Display the background image. |
| Ink Control (301) | Inkable Control. |
| Text Box (301) | Multi-line textbox with auto-wrap. Supports rich text. If text flows off screen, show a vertical scrollbar for the text. |
| Tooltips | Help for all user interface controls on the Bubble surface. |
| URI | If URI information is programmatically provided to the Bubble, it is displayed on the Bubble user interface. |

The Sticky Note Bubble control may further have an object model including a plurality of properties, methods, and events, as illustratively shown in Tables 4 through 6, that may expose an application programming interface (API) for hosting the sticky note bubble control and/or for enabling customization of user interfaces and functionality. These illustrative API elements may exist in any combination or subcombination. Developers leverage the provided user interface elements, properties, methods, and events of the Sticky Note Bubble to serve their own purposes. For example, an application developer who wishes to create an application that can host electronic sticky note controls supporting ink, voice, and text input features may do so by creating the appropriate software code that can instantiate, customize, and control a Sticky Note Bubble control, from within the application, using the API exposed from the Sticky Note Bubble control. The developer may specify which set of elements in the application is annotatable and provide some user interface (e.g., a button labeled "Add Annotation") for adding embedded electronic sticky notes. At run time, the application user may choose to add an annotation, and in response a Sticky Note Bubble control appears, thereby allowing the user to add ink, text, and voice annotations. As another example, the developer may desire to write an electronic sticky note application. The developer may create a basic framework and write just enough code to display a Sticky Note Bubble control and use the API exposed by the control to get and set data from the control so as to persist the electronic sticky note content in any desired manner.

**Table 4 -**

| Examples of Sticky Note Bubble Properties | | |
|---|---|---|
| Name | Type | Description |
| InkEnabled | Boolean: True, False | Determines whether Inking is enabled in the Bubble or not. Gets/Sets the state of whether the Bubble supports inking or not. By default the Bubble has inking turned on and InkEnabled returns true. If the bubble could not load inking system, then InkEnabled returns false. The host app can also set InkEnabled=false to disable Ink input which then sets the Bubble into Text-Input only mode (and the Ink-Text toggle button is hidden). If the Bubble cannot support inking, and the host app sets InkEnabled=true, nothing happens. |
| TextEnabled | Boolean: True, False | Determines if text input is enabled in the Bubble or not. Gets/Sets the state of whether the Bubble supports text input or not. By default the Bubble has text input turned on and TextEnabled returns true. The host app can also set TextEnabled=false to disable Text input which then sets the Bubble into Ink (or Audio) -Input only mode (and the Ink-Text toggle button is hidden). |
| AudioEnabled | Boolean: True, False | Determines if the Audio is enabled in the Bubble or not. Gets/Sets the state of whether the Bubble supports audio or not. By default the Bubble has audio turned on and AudioEnabled returns true. If the bubble could not load System audio settings and audio is disabled then AudioEnabled returns false. The host app can also set AudioEnabled=false to disable Audio input which then sets the Bubble into Text or ink Input only mode (and the Audio button is disabled). If the Bubble cannot support audio, and the host app sets AudioEnabled=true, nothing happens. |
| ReadOnly | Boolean: True, False | Once the read-only property is set to true, no further changes to the Bubble content are allowed. |
| Text | Rich Text | Gets/sets all the text displayed in the Bubble. A set operation replaces whatever is in the Bubble. |
| Ink | Ink Serialized Format | Gets/sets all the ink strokes in the Bubble (there is no merging or editing - a set operation will replace the current ink contents) |
| Recognition Text | String | Gets the "recognized text" for the ink in the control |
| Audio | Audio formats | Gets/sets the audio stream for the Bubble. |
| Image | Image formats | Gets/Sets a background image in the Bubble. The image is in a non-selectable, non-modifiable background z-layer of the bubble (behind the ink and text layers). The Bubble automatically adds padding to the image so it is centered in the Bubble and renders it with a shadow. |
| ContextInfo | String | Gets/Sets any context information that the caller wants to get/set. This information may not be displayed in the user interface of the Bubble. |
| ContextUri | String | Gets/Sets the source of the context (File, URL, etc) |
| IsDirty | Boolean: True, False | Gets/Sets a state of the control representing whether its content has changed |
| Expanded | Boolean: True, False | Gets/Sets the expanded or minimized state of the Bubble. If Expanded=false, the Bubble is in a minimized state. |
| ShowAsIcon | Boolean: True, False | If ShowAsIcon=true, then closing the bubble causes the bubble to be rendered as an icon. If ShowAsIcon=false, then closing the bubble causes it to go away entirely. |
| Color | Color value | Resets the Color on the Bubble user interface |
| InactiveOpacity | Float: 0.0 to 1.0 | Gets/Sets the opacity value for inactive instances of the Bubble. This applies to icons as well. This allows electronic sticky notes to be displayed translucently when they are not active. |
| Caption | String | String that is displayed in the Title area of the Bubble. |
| CreationTime | Long | Gets/Sets a Bubble's creation time |
| ModificationTime | Long | Gets/Sets a Bubble's modification time |
| Menu | Menu | Used for customizing the Menu on the Bubble which replaces the default Bubble Menu. |
| InputMode | Enum Type {Text, Ink, Audio} | Gets/Sets the default input mode on the control when the control is displayed |
| MaxRecordingLengt h | Long | Gets/Sets the time limit for the maximum recording length that the control supports |
| Author | String | Gets/Sets the Author information for the Bubble |
| RecordingLength | Long | Gets/Sets the default recording length for the Bubble (in Seconds) |

**Table 5 -**

| Examples of Sticky Note Bubble Methods | |
|---|---|
| Name | Description |
| SetHost | Associates the control with the hosting application by passing in interfaces that the control uses to communicate with its host |
| SetEnvironment | Allows the hosting application to provide interfaces to the control for communicating with other elements or children of the hosting application (e.g. for embedded electronic sticky notes, allows communicating with the component on which the electronic sticky note is visually displayed) |
| SetStorage | Allows the host to provide interfaces through which the control can persist its data |
| SetData | Provides a way to pre-populate the control with relevant data when pre-existing content is to be displayed to the user |
| GetData | Allows extracting the current data contents of the control |
| AddData | Appends data to the contents already in the control |
| Initialize | Informs the control to initialize its user interface settings and populate them with the data provided through other methods |
| SetActive | Activates the sticky note control so that it can accept user input |
| ClearData | Allows programmatically clearing all the contents in the control |
| Save | Instructs the Bubble to perform a save operation on its current content. |
| Clear | Clears all the data in the Bubble, including any Audio. |
| GetThumbnail | Gets a thumbnail of the current contents of the Bubble. The thumbnail does not include the user interface elements and contains a scaled down view of the sticky note contents. |
| Copy | Copies the Bubble's contents to the Clipboard. |
| Paste | Pastes data from Clipboard into the Bubble. |
| Play | Plays Audio if Bubble has some audio data. Starts at the specified seek position |
| Record | Starts recording Audio if Bubble is set up to record audio. |
| Stop | Stops playing or recording audio. If recording, returns the recording length. If playing, returns the seek position where the play stopped. |

**Table 6 -**

| Examples of Sticky Note Bubble Events | |
|---|---|
| Name | Description |
| BubbleDraggedEvent | Fired when the user attempts to drag the Bubble via its 'titlebar' |
| BubbleClosedEvent | Fired when the user closes the Bubble |
| BubbleDeletedEvent | Fired when the user deletes the annotation contents |
| BubbleResizedEvent | Fired when the user attempts to resize the Bubble |
| BubbleExpandedEvent | Fired when the Bubble is expanded or collapsed |

While apparatuses and methods as described herein embodying various aspects of the present invention are shown by way of example, it will be understood that the invention is not limited to these particular embodiments. Modifications may be made by those skilled in the art, particularly in light of the foregoing teachings. For example, one or more of the elements of the aforementioned embodiments may be utilized alone or in combination with one or more elements of the other embodiments. Also, although portions of the disclosure are described in connection with Microsoft WINDOWS brand operating systems, it should be understood that other operating systems may be used, such as other graphical user interface-based operating systems. In addition, the invention has been defined using the appended claims, however these claims are also illustrative in that the invention conceived of includes elements and steps described herein in any combination or sub combination. It will also be appreciated and understood that modifications may be made without departing from the true spirit and scope of the invention.

## Claims

1. A method in a computer having a graphical user interface, comprising steps of:
creating an electronic sticky note having content; and
attaching the electronic sticky note to a first item such that at least a portion of the content of the electronic sticky note is viewable without opening the first item.

2. The method of claim 1, further including steps of:
detaching the electronic sticky note from the first item; and
attaching the electronic sticky note to a second item different from the first item.

3. The method of claim 1, further including a step of embedding the electronic sticky note in the first item.

4. The method of claim 1, further including steps of:
detaching the electronic sticky note from the first item; and
embedding the electronic sticky note in a second item different from the first item.

5. The method of claim 1, further including a step of displaying an icon representing the first item, wherein the icon includes an indication of whether the electronic sticky note is attached to the first item.

6. The method of claim 1, further including steps of:
displaying an icon representing the first item; and
displaying an indication associated with the icon of whether the electronic sticky note is attached to the first item.

7. The method of claim 6, wherein the step of displaying the indication includes displaying the indication so as to overlay the icon.

8. The method of claim 6, wherein the indication includes at least a portion of the content of the electronic sticky note.

9. The method of claim 6, wherein the indication further indicates a type of the content of the electronic sticky note.

10. The method of claim 1, further including a step of displaying the content of the electronic sticky note in response to hovering over the first item.

11. The method of claim 1, further including a step of open the electronic sticky note without opening the first item.

12. The method of claim 1, wherein the content of the electronic sticky note includes audio content.

13. A computer-readable medium storing computer-executable instructions for performing the steps recited in claim 1.

14. A method in a computer having a graphical user interface, comprising a step of displaying an electronic sticky note having a user-selectable portion; and
attaching the electronic sticky note to an underlying item icon in response to the user-selectable portion being selected.

15. The method of claim 14, further including a step of detaching the electronic sticky note from the item icon to which it is attached in response to the user-selectable portion being selected.

16. The method of claim 14, further including a step of visually indicating that the item icon has an attached electronic sticky note.

17. A computer-readable medium storing computer-executable instructions for performing the steps recited in claim 14.

18. A method in a computer having a graphical user interface, comprising a step of displaying an item icon and an indication that an electronic sticky note is attached to the item.

19. The method of claim 18, wherein the step of displaying includes displaying the indication so as to overlay the item icon.

20. The method of claim 18, wherein the indication is part of the item icon.

21. A computer-readable medium storing computer-executable instructions for performing the step recited in claim 18.

22. A method in a computer having a graphical user interface, comprising steps of:
browsing to a remotely-generated Internet web page; and
attaching an electronic sticky note to the Internet web page.

23. The method of claim 22, further including a step of generating and storing locally at the computer associating information associating the electronic sticky note with the Internet web page.

24. The method of claim 23, further including a step of displaying at least a portion of the Internet web page and a visual indication of the electronic sticky note simultaneously, the visual indication of the electronic sticky note being displayed at a location on the Internet web page in accordance with the associating information.

25. A computer-readable medium storing computer-executable instructions for performing the steps recited in claim 22.

26. A method in a computer for allowing an electronic sticky note to be associated with a target, comprising steps of:
a first software component creating a data object representing the electronic sticky note and passing the data object to a drag-drop component;
in response to receiving the data object, the drag-drop component calling a second software component;
the second software component receiving the call and in response determining whether the target is a valid drop target for the electronic sticky note, and generating target status information representing a result of the determination; and
the first software component choosing which of a plurality of indicators to display based upon the target status information.

27. The method of claim 26, wherein the data object includes a file path of the electronic sticky note.

28. The method of claim 26, wherein the data object specifies the second software component.

29. The method of claim 26, further including steps of:
the drag-drop component notifying the second component that the data object has been dropped over the target; and
the second software component associating the electronic sticky note with the target.

30. The method of claim 26, wherein the second software component is a shell extension.

31. A computer-readable medium storing computer-executable instructions representing a drag-drop software component for attaching electronic sticky notes to items.

32. A method in a computer having a graphical user interface, comprising steps of:
adding content to an electronic sticky note; and
after the step of adding, attaching the electronic sticky note to a first item.

33. The method of claim 32, further including a step of detaching the electronic sticky note from the first item.

34. The method of claim 33, further including a step of either attaching or embedding the electronic sticky note to or in a second item different from the first item.

35. A method in a computer having a graphical user interface, comprising steps of:
adding content to an electronic sticky note; and
after the step of adding, embedding the electronic sticky note in a first item.

36. The method of claim 35, further including a step of detaching the electronic sticky note from the first item.

37. The method of claim 36, further including a step of either attaching or embedding the electronic sticky note in or to a second item different from the first item.

38. A method in a computer, comprising steps of:
receiving a first photo file;
receiving an audio file including audio data; and
adding the audio data to an electronic sticky note.

39. The method of claim 38, further including a step of attaching the electronic sticky note to the first photo file.

40. The method of claim 38, further including a step of embedding the electronic sticky note in the first photo file.

41. The method of claim 38, further including steps of:
replicating the first photo file to create a second photo file; and
attaching the electronic sticky note to the second photo file.

42. The method of claim 38, further including steps of:
replicating the first photo file to create a second photo file; and
embedding the electronic sticky note in the second photo file.

43. The method of claim 38, wherein the audio file includes a reference to the first photo file.
